(19)

Europäisches
Patentamt
European
Patent Office
Office européen
des brevets

(11) **EP 2 219 103 A1**

(12) **EUROPEAN PATENT APPLICATION**

(43) Date of publication:
**18.08.2010 Bulletin 2010/33**

(51) Int Cl.:
***G06F 3/042*** *(2006.01)*

(21) Application number: **10152104.5**

(22) Date of filing: **29.01.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **13.02.2009 TW 98104690**
**28.01.2010 TW 99102473**

(71) Applicant: **Arima Lasers Corp.**
**Dashi Township, Taoyuan County 335 (TW)**

(72) Inventors:
• **Wu, Ming-Cho**
**325, Taoyuan County (TW)**
• **Lin, Ching-Hui**
**105, Taipei City (TW)**

(74) Representative: **Becker Kurig Straus**
**Patentanwälte**
**Bavariastrasse 7**
**80336 München (DE)**

(54) **Detection module and optical detection system comprising the same**

(57) Disclosed herein are optical detection systems and modules thereof. The optical detection system is used for determining a location where an object contacts a detection area.

Fig. 1

EP 2 219 103 A1

**Description**

**BACKGROUND**

Field of Invention

The present invention relates to a detection module and an optical detection system comprising the same.

Description of Related Art

Nowadays, optical detection systems are sometimes employed as an input means of computing devices. Conventionally, a number of image and/or optical detectors are arranged around the peripheral of a detection area such as a display screen.

For example, a coordinate input device disclosed in US patent No. 7,414,617 includes a pair of cameras positioned in an upper left position and an upper right position of a display screen of the monitor and views both a side face of an object in contact with a position on the display screen and a pre-determined desk-top coordinate detection area to capture the image of the object with the field of view. The touch location of the object on the display screen is calculated based on video signals output from the pair of cameras.

US patent US 7,538,759 provide a touch screen system, in which several first light sources are disposed along one edge of a display screen and three reflectors are respectively attached to the remaining three edges of the display screen. Two detectors can detect variations of the reflected light when an object, e.g. a finger or a stylus, touches the display screen. A similar approach is provided in Taiwan Patent No. 496,965, in which an optical detection device equipped with a complicated light-emitting unit, an image detection unit arranged along one edge of a display screen and three reflectors respectively attached to the remaining three edges of the display screen is disclosed.

In the above-identified examples, four edges of the display screen are either occupied by cameras, optical detectors, optical lens or reflectors. In other words, the structure of the optical detection device suggested in the prior art is complicated, and therefore is more expensive to manufacture or maintain. Hence, there exist in this art an improved optical detection device that is easy to use and more economically to implement as part of a computer input system.

**SUMMARY**

The following presents a simplified summary of the disclosure in order to provide a basic understanding to the reader. This summary is not an extensive overview of the disclosure and it does not identify key/critical elements of the present invention or delineate the scope of the present invention. Its sole purpose is to present some concepts disclosed herein in a simplified form as a prelude to the more detailed description that is presented later.

In view of the foregoing, in one aspect, the present invention is directed to a module for use in an optical detection system, which can be used to detect an object within a detection area. Comparing with conventional optical detection systems, the module provided herein is simple in structure and may still detect the object effectively.

According to one embodiment of the present invention, the module for use in an optical detection system may comprise a first light-generating unit and a detection unit. The first light-generating unit includes a first light source and a first light-converting lens. The first light source may emit a first collimated light beam. The first light-converting lens is configured to convert the first collimated light beam into a first sheet of light entering into a detection area. When an object is located within the detection area, the object may intercept and reflect part of the first sheet of light thus producing a first reflected light. The detection unit includes a detector and a guiding lens. The guiding lens is configured to receive and guide the first reflected light, whereas the detector is configured to receive the first reflected light passing through the guiding lens, thereby forming an image of the object on the detector.

In alternative embodiments, the module further comprises at least one second light-generating unit. The second light-generating unit includes a second light source and a second light-converting lens. The second light source may emit a second collimated light beam. The second light-converting lens is configured to convert the second collimated light beam into a second sheet of light entering into the detection area. In this case, when an object is located within the detection area, the object may intercept and reflect part of the first sheet of light and part of the second sheet of light thus producing a first reflected light and a second reflected light, respectively. The guiding lens is configured to receive and guide the first and second reflected lights, whereas the detector is configured to receive the first and second reflected lights passing through the guiding lens, thereby forming an image of the object on the detector. In such optional embodiments, two or more light-generating units are employed in the module which may further increase the intensity of the reflected lights detected by the detecting unit. As such, the accuracy of the detection may be improved.

Each of the first and/or second light-converting lenses used in the embodiments provided herein is a line-generating lens or a cylindrical lens.

The guiding lens used in the embodiments provided herein is a convex lens or a composite lens assembly.

Each of the first and/or the second light sources used in the embodiments provide herein comprises an infrared laser diode and a collimating lens. When the first and/or second light source comprise the infrared laser diode, the detection unit may optionally further comprise an infrared long pass filter for filtering out the visible light.

The detector used in the embodiments provided herein may be a linear sensor. For example, the linear sensor may be a linear complementary metal oxide semiconductor (linear CMOS) sensor, a linear charge coupled device (linear CCD) or a position-sensing detector.

In another aspect, the present invention is directed to an optical detection system which employs the module provided in the above-described aspect. The optical detection system may be used to detect the touch location of an object within a detection area. Comparing with conventional optical detection systems, the optical detection system provided herein has simple structure and may still detect the touch location of the object effectively.

According to one embodiment of the present invention, the optical detection system includes two modules disclosed herein and a processing unit in communication with the two modules. Each of the two modules is oriented toward the detection area and spaced from each other by a distance. The processing unit is operable to determine the touch location of the object within the detection area by triangulation based on the distance between the two modules and two included angles each formed between the object and the respective module.

In alternative embodiments, the two modules used in the optical detection system may further comprise at least one second light-generating unit, respectively. The second light-generating unit includes a second light source and a second light-converting lens. The second light source may emit a second collimated light beam. The second light-converting lens is configured to convert the second collimated light beam into a second sheet of light entering into a detection area. In this case, when an object is located within the detection area, the object may intercept and reflect part of the first sheet of light and part of the second sheet of light thus producing a first reflected light and a second reflected light. The guiding lens is configured to receive and guide the first and second reflected lights, whereas the detector is configured to receive the first and second reflected lights passing through the guiding lens thereby forming an image of the object on the detector. In such optional embodiments, two or more light-generating units are employed in the module which may further increase the intensity of the reflected lights detected by the detecting unit. As such, the accuracy of the detection may be improved. Preferably, such optical detection system may be used in applications where larger detection area is desired.

The optical detection module/system according to the embodiments provided herein may be integrated into or removably installed in adjacent to the peripheral of a display screen in such a way that the detection area is within the display area of a display screen. For example, in an optional arrangement, the module/system provided herein may be integrated into or removably installed on one edge of the display screen.

Each of the first and/or the second light sources used the embodiments provided herein comprises an infrared laser diode and a collimating lens. When the first and/or second light source comprise an infrared laser diode, the detection unit may optionally further comprise an infrared long pass filter for filtering out the visible light.

According to the principles and spirits of the present invention, each optical detection system should comprise two modules. The number of the light-generating unit employed in each module may depend on the desired size of the detection area. Generally, the detection area is located on a display face of a display screen. In one example, the optical detection system may have two modules each employing only one light-generating unit and such system is suitable to be used with a display screen having a diagonal measurement of less than 30 inches. In another example, each of the two modules of the optical detection system may employ at least two light-generating units, and such system is suitable to be used with a display screen having a diagonal measurement of at least 30 inches.

Many of the attendant features will be more readily appreciated as the same becomes better understood by reference to the following detailed description considered in connection with the accompanying drawings.

## BRIEF DESCRIPTION OF THE DRAWINGS

The present description will be better understood from the following detailed description read in light of the accompanying drawings, wherein:

FIG. 1 is a schematic diagram illustrating two modules arranged in proximity of a detection area according to one embodiment of the present invention;
FIG. 2 illustrates a schematic diagram of a module detecting an object and the position-signal diagram according to one embodiment of the present invention;
FIG. 3 is a schematic diagram illustrating an object within a detection area and an image of the object formed in the optical detection system;
FIG. 4 is a schematic diagram illustrating an optional detection system removably installed on a laptop according to one embodiment of the present invention;

FIG. 5 is a schematic diagram illustrating an optional detection system removably installed in adjacent to a display screen according to one embodiment of the present invention;

FIG. 6 is a schematic diagram illustrating an optional detection system/module integrated within an edge of a display screen according to one embodiment of the present invention; and

FIG. 7 is a schematic diagram illustrating an optional detection system/module removably installed on the four edges of a display screen according to one embodiment of the present invention.

Wherever possible, like reference numerals are used to designate like parts in the accompanying drawings.

## DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In one aspect, the present invention is directed to an optical detection system to be implemented on a display screen. The optical detection system can be use for determining a touch location of an object (such as the fingertip of a user or a stylus) on the screen.

According to the principles and spirits of the present invention, the module provided herein can be used in an optical detection system for determining the touch location of an object on the display screen. Each module includes a first light-generating unit and a detection unit. Generally, when the object touches the detection area, such as a detection area within the display face of a display screen, two modules are required to determine the coordinate of the object. In addition to the modules, a processing unit is required to process the coordinate data and determine the touch location of the object on the detection area.

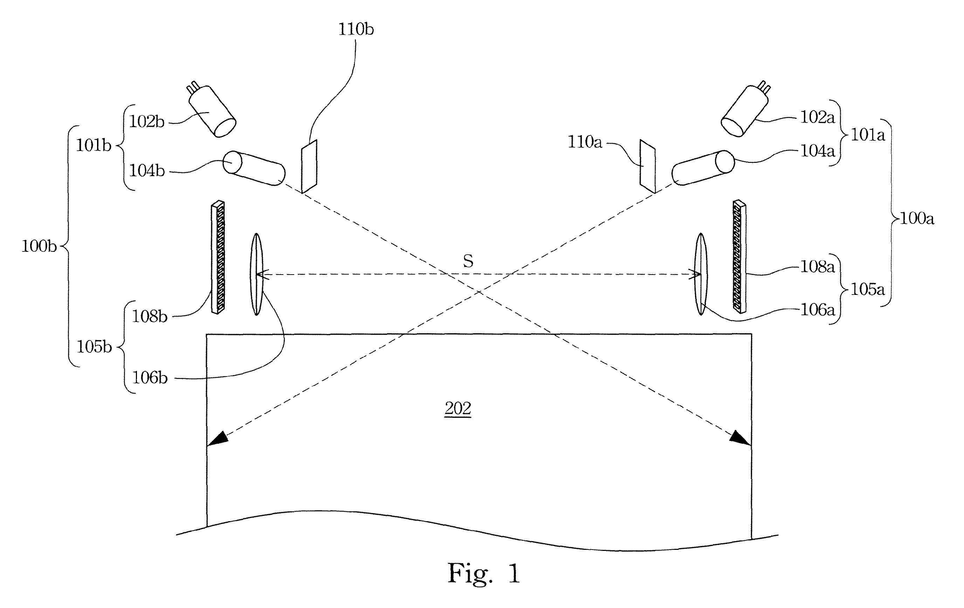

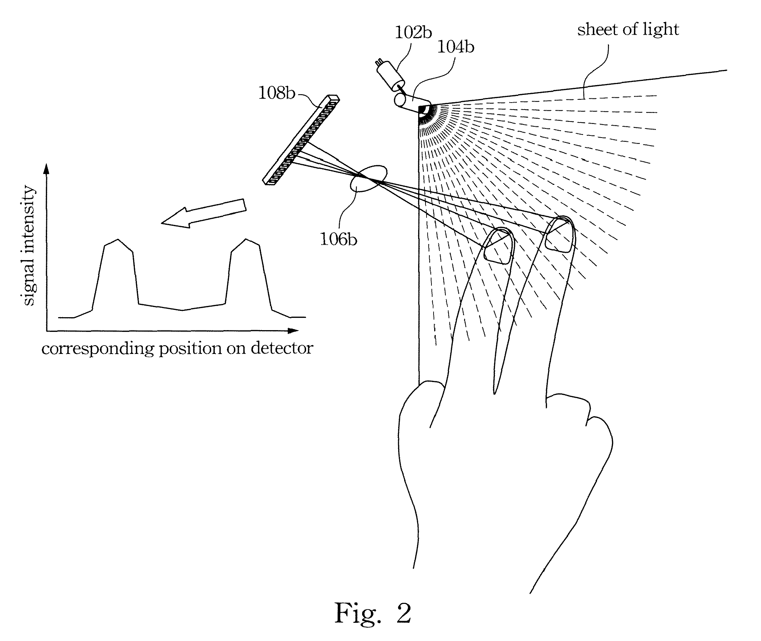

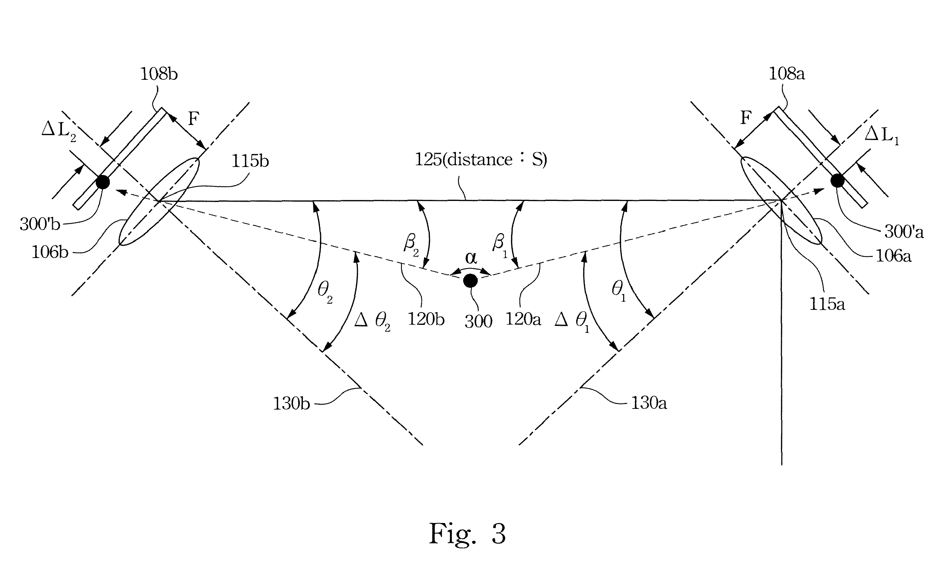

Reference is made to FIGs. 1 to 3 to illustrate the structure and operation principles of the optical detection system and/or module provided herein. FIG. 1 is a schematic diagram illustrating two modules arranged in proximity of a detection area according to one embodiment of the present invention. FIG. 2 illustrates a schematic diagram of a module detecting an object and the position-signal diagram according to one embodiment of the present invention. FIG. 3 is a schematic diagram illustrating an object within a detection area and an image of the object formed in the optical detection system;

As illustrated in FIG. 1, each of the modules 100a, 100b is disposed at a respective upper corner of the detection area 202. Also, modules 100a, 100b are oriented toward (the direction indicated by the dashed arrows shown in FIG. 1) a detection area, respectively. In the present disclosure, the term "oriented toward a detection area" means that the first light-generating unit of each module is operable to emit a first sheet of light toward the detection area, and the detection unit of each module is operable to detect a reflected light from the detection area.

In the embodiments of the present invention, e ach of the first light-generating unit comprises a first light source (102a or 102b) and a first light-converting lens (104a or 104b), respectively.

Each of the first light sources 102a, 102b is operable to emit a first collimated light beam having high directionality. For example, a suitable first light source may comprise a laser light source such as an infrared laser diode capable of emitting laser light having a wavelength of about 780, 808 or 850 nm. Generally, the laser beam emitted by a laser diode has a large divergence angle. As such, a collimating lens is required to convert the laser beam into collimated light beam. Accordingly, the first light source (102a or 102b) may further comprise a collimating lens in addition to the laser light source.

Each of the first light-converting lenses 104a and 104b is disposed on the optical path of the respective first light source 102a and 102b. For example, the light converting lens can be disposed in front of the light source. Besides, the first light-converting lens and the first light source may work collaboratively to convert the first collimated light beam into a first sheet of light entering into the detection area 202. Any lens capable of converting a collimated light beam into a sheet of light can be used as the first light-converting lens (104a or 104b). By way of example, rather than limitation, the first light-converting lens (104a or 104b) can be a line-generating lens such as a cylindrical lens.

Optionally, the line-generating lens can rotate or swivel rapidly so that the first sheet of light may scan across the detection area as thoroughly as possible.

In optional embodiments, each of the modules 100a, 100b may further comprise a light shield (110a or 110b). For example, the light shield 110a is operable to prevent the light emitted by the first light source 102a from entering into the detection unit 105b of module 100b, whereas the light shield 110b is operable to prevent the light emitted by the first light source 102b from entering into the detection unit 105a of the module 100a. Generally, the above-mentioned purpose can be achieved by properly configure the light shield of one module relative to the light-generating module of the other module.

Generally, the elevation of the plane of the sheet of light emitted by the first light-generating unit is slightly above and substantially parallel to the surface of the detection area 202. According to the principles and spirits of the present invention, the detection area 202 may be directed to a display face of a display screen. Hence, when an object (such as a finger) contacts the surface of the detection area 202 (such as the display face of a display screen), the object may intercept and reflect part of the first sheet of light to generate a first reflected light, as shown in FIG. 2.

Reference is again made to FIG. 1. As shown in FIG. 1, each detection unit may comprise a guiding lens (106a, 106b) and a detector (108a, 108b).

Each of the guiding lenses 106a and 106b is configured to receive and guide the first reflected light to the respective detectors 108a and 108b. Generally, the guiding lens (106a, 106b) can be disposed on the optical path of the detector (108a, 108b). For example, the guiding lens (106a, 106b) can be disposed in front of the optical path of the detector (108a, 108b). As such, each of the detectors 108a and 108b is operable to receive the first reflected light guided by the respective guiding lens (106a, 106b) thereby forming an image of the object on the respective detector (108a, 108b), respectively.

Optical lens capable of guiding the reflected light to the detector, thereby forming an image of the object on the detector can be used as the guiding lens (106a, 106b), examples of which include but are not limited to, a single convex lens and a composite lens assembly. The composite lens assembly may comprise multiple lenses arranged in a row or an array. For example, the composite lens assembly may comprise multiple convex lenses arranged in a row or in an array; alternatively, the composite lens assembly may comprise at least one convex lens and at least one concave lens arranged in a row or in an array, as long as the composite lens assembly is capable of directing the reflected light so that the light forms the image of the object on a detector. In the embodiment illustrated in FIG. 1, the guiding lens is a single convex lens.

Generally, devices capable of detecting one-dimensional position signal can be used as the detector described herein, examples of which include but are not limited to a linear complementary metal oxide semiconductor (linear CMOS) sensor, a linear charge coupled device (linear CCD) and an optical position-sensing detector.

Optionally, each detection unit may further comprise an infrared long pass filter for filtering out the visible light so that the visible light would not enter the detector (108a, 108b). Specifically, the infrared long pass filter may permit the infrared having a wavelength of at least 750 nm passing therethrough while filtering out the visible light having a wavelength of less than 750 nm.

For example, in one embodiment, each of the light sources 102a and 102b may comprise an 850 nm infrared laser diode and a collimating lens, and the detection unit may further comprise an infrared long pass filter. In this way, it is less likely that the detectors 108a and 108b are subjected to the interference caused by surrounding visible light thereby improving the detection efficacy of the optical detection system.

The infrared long pass filter may be optionally coated as a film on a light-incident side (the side facing the guiding lens) of a detector (108a, 108b); however, the present invention is not limited thereto. Alternatively, the infrared long pass filter may be in the form of a film and disposed on the light-incident side (the side facing the detection area) or the light-emitting side (the side facing the detector) of the guiding lens. Alternatively, the infrared long pass filter may be in a form of a separate device (such as an optical filter) and disposed in front of the light-incident side of the guiding lens or between the guiding lens and the detector.

Please refer to FIG. 2, take the module 100b for example, the guiding lens 106b and the detector 108b may work collaboratively to form an image on the detector 108b by using the reflected light. As shown in FIG. 2, when two fingers touch the detection area, the detector 108b, a linear sensor as in this example, may detect the signal representing the reflected light caused by these two fingers, and an image of the fingers is formed on the detector 108b thereby. Please refer to the signal-position diagram, wherein the Y axis represents the signal intensity; and the X axis represents the corresponding position on the detector. By way of example, rather than limitation, the signal-position diagram of FIG. 2 illustrates that there are two finger tips touching the detection area. The information embodied in the signal-position diagram may be used as a position signal by the processing unit.

In the present embodiment, the optical detection system may further comprise a processing unit (not shown in FIG. 1) in communication with the two modules. The processing unit is operable to determine the touch location of the object within the detection area by triangulation. Generally, the processing unit should be operable to receive the position signal provided by the detectors 108a and 108b. Therefore, the processing unit should be communicatively connected to the two modules. Such connection may be a wired connection, a wireless connection or a combination thereof. Further, the processing unit may be integrated with the two modules to provide a single device or may be separately configured.

For example, when the processing unit is disposed separately from the two modules, the processing unit may employ wireless communication techniques such as infrared, bluetooth, etc. to establish a communication connection with the modules; alternatively, the processing unit may connect to the modules through a parallel port, a universal serial bus (USB) or wired communication techniques. When the processing unit and the two modules are integrated in a single device, the two modules may connect to the processing unit through a parallel port, a universal serial bus (USB) or other suitable connecting means.

Reference is made to FIG. 3 to further illustrate the principle employed by the processing unit for determining the touch location of an object by triangulation.

In the present disclosure, the center of each of the guiding lens 106a and 106b is used as a reference point (115a or 115b). In operation, since the two modules of the optical detection unit have been disposed at a known position, the distance S (the length of line 125) between the two reference points can be ascertained.

As illustrated in FIG. 3, an object 300 touches the detection area and intercepts and reflects part of the first and second sheet of lights, which is generated from the light-generating units (not shown) of the two modules, into reflected lights 120a and 120b, respectively. The reflected lights 120a, 120b respectively passes through one of the guiding lenses 106a and 106b, thereby forming images 300'a and 300'b on the respective detectors 108a and 108b.

According to FIG. 3, each of the guiding lenses 106a and 106b has an axis (130a or 130b), wherein an included angle ($\theta_1$ or $\theta_2$) is formed between the axis (130a or 130b) and the line 125. Since the two modules are positioned in a known position, the included angles $\theta_1$ and $\theta_2$ may also be ascertained.

Moreover, the images 300'a and 300'b formed on the detectors 108a and 108b. The image (300'a, 300'b) formed on detector (108a, 108b) may be formed at a position away from the intersection point of the detector (108a, 108b) and the axis (130a, 130b) by a distance ($\Delta L_1$, $\Delta L_2$). The distance ($\Delta L_1$, $\Delta L_2$) may vary depending on the touch location of the object 300 in the detection area. The processing unit may ascertain the distance ($\Delta L_1$, $\Delta L_2$) based on the position of the image (300'a, 300'b) formed on the detector. As shown in FIG. 3, F is the focal length of the guiding lens (106a, 106b). In this case, the focal length F of the guiding lens (106a, 106b) is the perpendicular distance of the reference point (115a, 115b) from the detector (108a, 108b).

Further, an included angle ($\Delta\theta_1$, $\Delta\theta_2$) is formed between the reflected light (120a, 120b) and the axis (130a, 130b), an included angle $\alpha$ is formed between the two reflected lights 120a and 120b, and an included angle ($\beta_1$, $\beta_2$) is formed between the reflected light (120a, 120b) and the line 125. Said included angles $\Delta\theta_1$, $\Delta\theta_2$, $\alpha$, $\beta_1$, and $\beta_2$ also vary depending on the touch location of the object 300 in the detection area. The processing unit may calculate $\Delta\theta_1$ and/or $\Delta\theta_2$ from equation 1:

$$\Delta\theta_n = \arctan\ (\Delta L_n/F) \qquad\qquad \text{Equation 1.}$$

Then, the processing unit may calculate $\beta_1$ and/or $\beta_2$ from equation 2:

$$\beta_n = \theta_n - \Delta\theta_n \qquad\qquad \text{Equation 2.}$$

Afterwards, the processing unit may determine the coordinate (touch location) of the object 300 in the detection area based on $\beta_1$, $\beta_2$ and S.

The processing unit described hereon may be implanted as hardware, software, firmware, or a combination thereof that is capable of performing the aforementioned calculation processes. For example, the calculation can be effected by the implementation of a center processing unit (CPU) built in a computer in conjunction with a suitable software so as to determine the touch location of the object within the detection area.

According to the principles and spirits of the present invention, the optical detection system/module disclosed herein may be used for detecting a touch location of an object within a detection area. Generally, the detection area may be located on a display face of a display screen thereby converting the ordinary display screen into a screen with a touch-input functionality. Preferably, the detection area should cover the whole display range of the display screen as much as possible. The display screen described herein is not limited to the display of personal computers (PCs), laptops, tablet PCs; rather, examples of the display screen also includes, but are not limited to, TV screens (such as CRT TV screens, LC TV screens, and Plasma TV screens) and projection screens. Besides, the detection area can also be applied to other articles thereby converting the articles into devices with a touch-input functionality. For example, when an article is configured to have at least one region designated/associated with a specific function or command, the article, used in conjunction with an optical detection system provided herein, may turns into a device capable of inputting the command or initiating the function.

According to embodiments of the present invention, the optical detection system/module may be integrated into or removably installed in adjacent to the peripheral of a display screen such that the detection area of each of the module is within the display area of a display screen. In the present disclosure, the term "the peripheral of a display screen" is referred to a position directly contacts or is in the proximity of (but not necessarily contacting) the edge(s) of the display screen. For example, the module may be integrated into or removably installed on at least one edge of the display screen. Preferably, the two modules may be respectively disposed at each of the two ends of one edge of the display screen such that the detection area may cover the whole display range of the display screen as much as possible.

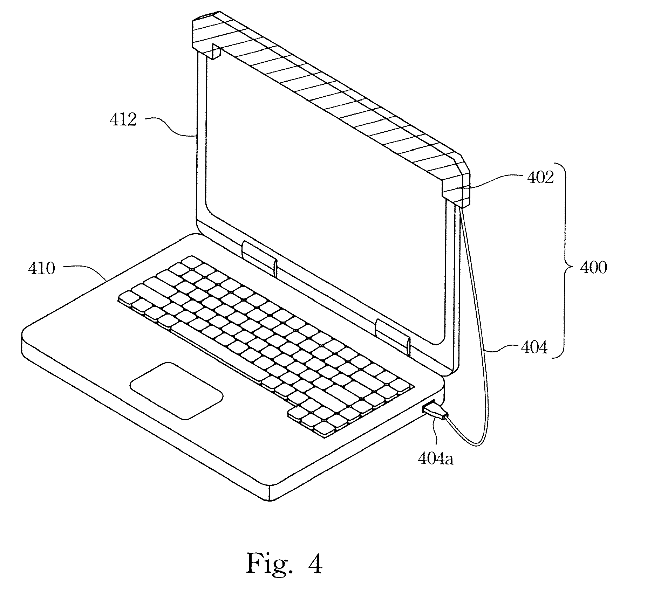

FIG. 4 is a schematic diagram illustrating an optional detection system 400 removably installed on a laptop 410 according to one embodiment of the present invention.

In this example, the optical detection system 400 comprises two modules (not shown in FIG. 4) according to the above-described aspect/embodiments of the present invention. Said two modules are disposed in a housing 402. Besides, the optical detection system comprises a processing unit (not shown in FIG. 4). The processing unit may be integrated in the housing 402; alternatively, the CPU built in the laptop 410 may be used in conjunction with a suitable application software to implant the processing unit.

As illustrated in FIG. 4, the housing 402 of the optical detection system 400 is removably installed on the upper edge of the display 412 of the laptop 410 in such a way that the detection areas of the two modules encompass the display range of the display 412 as thoroughly as possible. Alternativley, the housing 402 may be disposed at positions other than the upper edge of the display 412. For example, the housing 402 may be disposed on at least one of the other edges of the display 412 as long as the detection areas of the two modules encompass at least part of the display range of the display 412.

The optical detection system 400 may further comprise a connecting wire 404. A connector 404a, such as a USB adapter, is disposed at one end of the connecting wire 404. The connector 404a can be fitted into the corresponding slot disposed on the laptop 410. The other end of the connecting wire 404 is electrically coupled to the elements (such as those illustrated in FIG. 1) within the housing 402. In this way, the connecting wire 404 can be used for providing power (electricity) from the laptop 410 to the optical detection system 400 and providing the signal (or the data resulted from the calculation) from the optical detection system 400 to the CPU of the laptop 410.

Although the connecting wire 404 described hereinabove may be used to transfer both the power and signal, the present invention is not limited thereto. For example, the optical detection system 400 may have an additional power line (not shown in FIG. 4) connecting to an external power supply. Alternatively, the housing may have a battery (not shown in FIG. 4) disposed therein for powering the optical detection system 400. Examples of the battery include but are not limited to alkaline batteries, secondary batteries and solar cells. In these cases, the connecting wire 404 is merely used for transferring signals.

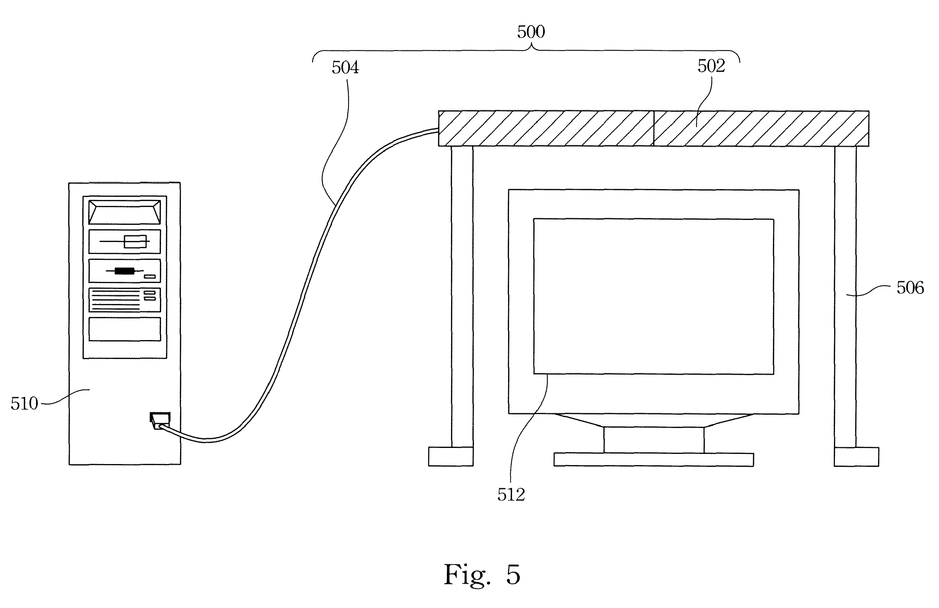

FIG. 5 is a schematic diagram illustrating an optional detection system 500 removably installed in adjacent to a display screen 512 according to one embodiment of the present invention.

The optical detection system 500 is similar to the optical detection system 400 described hereinabove. Accordingly, for the sake of brevity, a description of the structure of the optical detection system 500 is not repeated herein.

As illustrated in FIG. 5, the housing 502 of the optical detection system 500 is removably (detachably) installed above the upper edge of the display 512 of a PC 510 in such a way that the detection areas of the two modules (not shown in FIG. 5) dispose within the housing 512 may cover the display range of the display 512 as thoroughly as possible. However, the hosing 502 may be installed at positions other than above the upper edge of the display 512. For example, the hosing 502 may be installed in adjacent to the other edges of the display 512 as long as the detection areas of the two modules may cover at least part of the display range of the display 512.

According to the present example, as illustrated in FIG. 5, the housing is mounted on a fixed surface, such as a tabletop, by an underlying support 506. As can be appreciated, the optical detection system 500 can be adapted for use with displays with various sizes by properly designing the housing 502 and the support 506. For example, the support 506 may be optionally designed as an adjustable support so that the housing 502 can be disposed at various heights. Alternatively, the housing 502 may ne optionally designed as a telescopic housing such that the distance between two ends of the housing 502 can be altered to accommodate to display with various sizes. The optical detection system 500 further comprises a connecting wire 504 for electrically coupling the housing 502 and the PC 510.

According to the principles and spirits of the present invention, there in no particular limitation as to the dimension of the detection area of the optical detection system provided herein. Specifically, the dimension of the detection area may be adjusted by properly arranging the disposal angles and positions of the two modules.

In theory, when it is desired to applied the optical detection system provided herein to a larger display screen, the detection efficacy can be maintained by increasing the light intensity of the first light source. However, the light intensity of the light source is subjected to specific regulation due to safety concerns. Implementations and simulations show that the optical detection system/module described hereinabove may effectively detect the touch location of the object within the detection area (display screen) when the detection area has a diagonal measurement of less than 30 inches. In contrast, the detection system/module described hereinabove may be less effective in detecting the touch location of the object within the detection area (display screen) when the detection area has a diagonal measurement of greater than 30 inches. In the latter scenario, the uniformity or intensity of the signal of the reflected light may be less than that of the former scenario.

In view of the foregoing, embodiments of the present invention provide an optical detection system/module with a larger detection area. Such optical detection system/module is suitable to be applied to a display screen with a larger display area.

In such embodiments, each module may further comprise a first light-generating unit, at least one second light-generating unit, and a detection unit. The first light-generating unit and the detection unit are similar to the first light-generating unit (101 a, 101b) and the detection unit (105a, 105b) described hereinabove in connection with FIG. 1 to Fir. 3. Besides, the first light-generating unit and the detection unit of the present embodiments may also optionally further comprise the elements described in the above-described optional embodiments. For example, the module may optionally comprise a light shield or an infrared long pass filter. Accordingly, for the sake of brevity, only the structure of the second light-generating unit is described hereinbelow, and a description of the structure of the first light-generating unit and the detector are not repeated.

In the present embodiments, each second light-generating unit comprises a second light source and a second light-converting lens. The second light source is operable to emit a second collimated light beam having high directionality. Examples of the suitable second light source are similar to those described regarding the first light source.

The second light-converting lens is disposed on the optical path of the second light source such as in front of the second light source. The second light-converting lens and the second light source may work collaboratively to convert the second collimated light beam into a first sheet of light entering into the detection area 202. Examples of the suitable second light-converting lens are similar to those described regarding the first light-converting lens.

In the present embodiments, the first and second light-generating units and the detection unit should be properly deployed such that the guiding lens of the detection unit is operable to receive the first reflected light and the second reflected light, and guide the first and second reflected lights to the detector thereby forming an image of the object on the detector.

The first light-generating unit and the second light-generating unit are spaced from each other by a distance. However, there is no particular limitation as to the relative disposition or distance between the first and second light-generating units as long as the first and second light-generating units of each module are operable to emit sheet of lights toward the detection area, respectively. For example, the first and the second light-generating units may be substantially oriented in the same direction; alternatively, the first and the second light-generating units may be oriented in different directions (such as, for example, one facing leftward while the other facing rightward; or one facing right downward while the other facing right upward.

The module according to the present embodiments comprises multiple light-generating units; as such, it is possible to improve the sensitivity and accuracy of the optical detection system applied to a larger detection area. Specifically, increasing the number of the light-generating unit may increase the light intensity of the sheet of light entering the larger detection area as comparing with a single light-generating unit. Moreover, the uniformity of the sheet of light across the extent of the detection area may be improved accordingly. In this way, the intensity of the reflected light generating by the object being irradiated by the sheet of light would also increase. Altogether, the sensitivity and accuracy of the detection will be improved. According to the principles and spirits of the present invention, the number of the light-generating unit may be determined depending on the dimension of the detection area. Generally, the larger the dimension of the detection area is, the more the number of the light-generating unit. For example, in some cases, three or more light-generating units may be required to provide an optical detection system with desired detection sensibility and accuracy.

Similarly, the optical detection system/module of the present embodiments may be integrated into or removably installed in adjacent to the peripheral of a display screen such that the detection area of each of the module is within the display area of a display screen. For example, the module may be integrated into or removably installed on at least one edge of the display screen.

The principle and method employed by the optical detection system/module of the present embodiments for calculating/determining the touch location of an object within a detection area are similar to those described hereinabove in connection with FIG. 2 and FIG. 3.

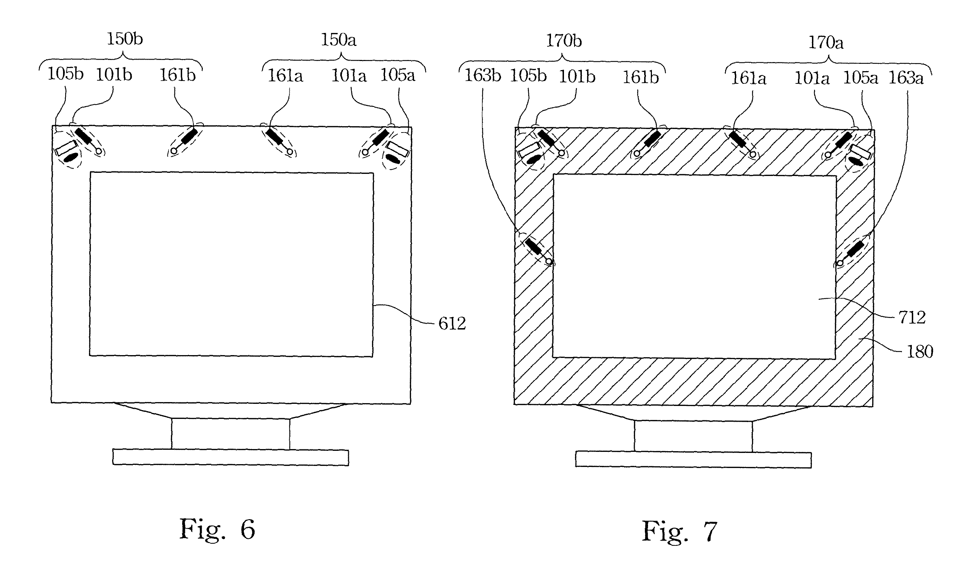

FIG. 6 and FIG. 7 are schematic diagrams illustrating optional detection systems/modules disposed in the peripheral of a display screen.

Please refer to FIG. 6, which illustrates an optional detection system/module integrated within an edge of a display screen according to one embodiment of the present invention.

In the present example, the optical detection system may comprise a processing unit (not shown in FIG. 6) and two modules 150a, 150b respectively disposed at an upper edge of a display 612. Each of the modules 150a and 150b comprises a first light-generating unit (101a, 101b), a second light-generating unit (161a, 161b) and a detection unit (105a, 105b).

As shown in FIG. 6, the first and second light-generating units of each module are oriented toward different directions, respectively, yet both of them are operable to emit sheet of lights entering the detection area (the display face of the display 612). Besides, the detection unit of each module is configured to receive the reflected light from the detection area.

Although the optical detection system/module illustrated in FIG. 6 is disposed at the upper edge of the display screen, the present invention is not limited thereto. For example, the optical detection system/module may be integrated into a left, right or lower edge of the display screen 612. Alternatively, the optical detection system/module may be removably installed on at least one edge of the display screen 612; such as the example illustrated in FIG. 4 and accompanying descriptions. Still alternatively, the optical detection system/module may be installed in adjacent to the peripheral of at least one edge of the display screen 612 without directly contacting said edge; such as the example illustrated in FIG. 5 and accompanying descriptions.

Please refer to FIG. 7, which illustrates an optional detection system/module removably installed on the edges of a display screen 712 according to one embodiment of the present invention.

According to the present embodiment, the optical detection system comprises a processing unit (not shown in FIG. 7) and two module 170a, 170b, respectively disposed in a housing 180. The housing 180 is designed as a frame that is configured to be removably installed around the peripheral of the display screen 712. Each of the modules 170a and 170b comprises a first light-generating unit (101a, 101b), two second light-generating unit (161a, 163a, 161b, 163b) and a detection unit (105a, 105b).

As shown in FIG. 7, the first and second light-generating units of each module are oriented toward different directions, respectively, yet both of them are operable to emit sheet of lights entering the detection area (the display face of the display 712). Take the first module 170a for example, the light-emitting sides of the first light-generating unit 101 a and one second light-generating unit 163a face left downward, whereas the light-emitting side of the other light-generating unit161a faces right downward. Besides, the detection unit of each module is configured to receive the reflected light from the detection area.

Although the optical detection system/module illustrated in FIG. 7 is disposed in a housing 180 and the housing 180 is removably installed around the dour edges of the display screen 712, the present invention is not limited thereto. For example, it is not a requisite that the housing 180 covers the four edges of the display screen 712 in the form of a frame; rather, the housing 180 may be designed to have a bar shape (such as the example illustrated in FIG. 4 and accompanying descriptions), ⌐┐ shape or L shape that covers part of the four edges of the display screen 712. Alternatively, the optical detection system/module may be integrated into at least one edge of the display screen 712; such as the example illustrated in FIG. 6 and accompanying descriptions. Still in another alternative arrangement, the optical detection system/module may be installed in adjacent to the peripheral of at least one edge of the display screen 712 without directly contacting said edge; such as the example illustrated in FIG. 5 and accompanying descriptions.

It is appreciated from the foregoing disclosure that an optical detection module and an optical detection system comprising the same are provided herein. The optical detection module/system is used for detection and determining a touch location of an object touching a detection area. As compared to conventional optical detection systems, the optical detection module/system provided herein is less complicated in structure. Besides, it is more easy and cost-effective to employ the optical detection system to turn an article (such as a display screen) into an input device.

It will be understood that the above description of embodiments is given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

**Claims**

1. A module for use in an optical detection system for detecting an object within a detection area, comprising:

   a first light-generating unit, comprising:

   a first light source for emitting a first collimated light beam; and
   a first light-converting lens configured to convert the first collimated light beam into a first sheet of light entering into the detection area, wherein when the object is within the detection area, the object may intercept and reflect part of the first sheet of light thus producing a first reflected light; and
   a detection unit, comprising:

   a guiding lens configured to receive and guide the first reflected light; and
   a detector configured to receive the first reflected light beam guided by the guiding lens generated by an object thereby forming an image of the object on the detector.

2. The module of claim 1, further comprising at least one second light-generating unit, which comprises:

    a second light source for emitting a second collimated light beam; and
    a second light-converting lens configured to convert the second collimated light beam into a second sheet of light entering into the detection area, when the object is within the detection area, the object may intercept and reflect part of the second sheet of light thus producing a second reflected light, wherein
    the guiding lens is configured to receive and guide the first and second reflected lights; and
    the detector is configured to receive the first and second reflected lights beam guided by the guiding lens generated by the object thereby forming an image of the object on the detector.

3. The module of claims 1or 2, wherein the second light-converting lens is a line-generating lens or a cylindrical lens.

4. The module of any one of claims 1 to 3, wherein each of the first and the second light sources comprises an infrared laser diode and a collimating lens.

5. The module of claim 4, wherein the detection unit further comprises an infrared long pass filter for filtering out visible light.

6. The module of any one of claims 1 to 5, wherein the guiding lens is a convex lens or a composite lens assembly.

7. The module of any one of claims 1 to 6, wherein the detector is a linear sensor, wherein the linear sensor is a linear complementary metal oxide semiconductor sensor, a linear charge coupled device, or a position-sensing detector.

8. An optical detection system for detecting a touch location of an object within a detection area, wherein the optical detection system comprises:

    two modules of any one of claims 1, 3, 4, 5, 6, and 7, respectively oriented toward the detection area and spaced from each other by a distance; and
    a processing unit in communication with the two modules, wherein the processing unit is operable to determine the touch location by triangulation based on the distance between the two modules and two included angles each formed between the object and the respective module.

9. The optical detection system of claim 8, wherein the two modules are integrated into or removably installed in adjacent to the peripheral of a display screen such that the detection area of each of the module is within the display area of a display screen.

10. The optical detection system of claim 9, wherein the two modules are integrated into or removably installed on at least one edge of the display screen.

11. The optical detection system of claims 9 or 10, wherein the display screen has a diagonal measurement of less than 30 inches.

12. An optical detection system for detecting a touch location of an object within a detection area, wherein the optical detection system comprises:

    two modules of any one of claims 2, 3, 4, 5, 6, and 7, respectively oriented toward the detection area and spaced from each other by a distance; and
    a processing unit in communication with the two modules, wherein the processing unit is operable to determine the touch location by triangulation based on the distance between the two modules and two included angles each formed between the object and the respective module.

13. The optical detection system of claim 12, wherein the two modules are integrated into or removably installed in adjacent to the peripheral of a display screen such that the detection area of each of the module is within the display area of a display screen.

14. The optical detection system of claim 13, wherein the two modules are integrated into or removably installed on at least one edge of the display screen.

**15.** The optical detection system of claims 13 or 14, wherein the display screen has a diagonal measurement of at least 30 inches.

Fig. 1

EP 2 219 103 A1

sheet of light

102b
104b
108b
106b

signal intensity

corresponding position on detector

Fig. 2

EP 2 219 103 A1

Fig. 3

Fig. 4

Fig. 5

Europäisches
Patentamt

European
Patent Office

Office européen
des brevets

# EUROPEAN SEARCH REPORT

**Application Number**

EP 10 15 2104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 100 538 A (OGAWA YASUJI [JP]) 8 August 2000 (2000-08-08) * abstract; figures 2,6,7a,12,23 * * column 7, line 40 - column 10, line 20 * * column 11, line 54 - column 12, line 11 * * column 16, line 28 - column 16, line 65 * ----- | 1-15 | INV. G06F3/042 |
| X | US 2004/257347 A1 (NOJI MINORU [JP]) 23 December 2004 (2004-12-23) * abstract; figures 1a,1b * * paragraphs [0032], [0037] * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 4 June 2010 | Pfaffelhuber, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 10 15 2104

This annex lists the patent family members relating to the patent documents cited in the above-mentioned European search report.
The members are as contained in the European Patent Office EDP file on
The European Patent Office is in no way liable for these particulars which are merely given for the purpose of information.

04-06-2010

| Patent document cited in search report | | Publication date | Patent family member(s) | | Publication date |
|---|---|---|---|---|---|
| US 6100538 | A | 08-08-2000 | DE | 19810452 A1 | 17-12-1998 |
| | | | JP | 3876942 B2 | 07-02-2007 |
| | | | JP | 11003170 A | 06-01-1999 |
| US 2004257347 | A1 | 23-12-2004 | JP | 2005011233 A | 13-01-2005 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7414617 B
- US 7538759 B

- TW 496965